(19) Europäisches Patentamt
European Patent Office
Office européen des brevets

(11) **EP 2 585 803 B1**

(12) **EUROPÄISCHE PATENTSCHRIFT**

(45) Veröffentlichungstag und Bekanntmachung des Hinweises auf die Patenterteilung:
**28.03.2018   Patentblatt 2018/13**

(21) Anmeldenummer: **11718075.2**

(22) Anmeldetag: **04.05.2011**

(51) Int Cl.:
*G01L 3/10* *(2006.01)*       *H02P 6/08* *(2016.01)*
*H02P 21/14* *(2016.01)*       *B60W 20/00* *(2016.01)*
*H02P 23/14* *(2006.01)*

(86) Internationale Anmeldenummer:
**PCT/EP2011/057138**

(87) Internationale Veröffentlichungsnummer:
**WO 2011/160880 (29.12.2011 Gazette 2011/52)**

(54) **VERFAHREN ZUR BESTIMMUNG DES DREHMOMENTES EINES ELEKTROMOTORS**

METHOD FOR DETERMINING THE TORQUE OF AN ELECTRIC MOTOR

PROCÉDÉ DE DÉTERMINATION DU COUPLE D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2010   DE 102010030365**

(43) Veröffentlichungstag der Anmeldung:
**01.05.2013   Patentblatt 2013/18**

(73) Patentinhaber: **Robert Bosch GmbH**
**70442 Stuttgart (DE)**

(72) Erfinder: **GOETTING, Gunther**
**70499 Stuttgart (DE)**

(56) Entgegenhaltungen:
WO-A1-2004/097359       DE-A1-102004 013 516
DE-A1-102008 026 509       US-A- 5 754 967
US-A1- 2009 115 362

**Beschreibung**

Die vorliegende Erfindung betrifft ein Verfahren zur Bestimmung des Drehmomentes eines Elektromotors gemäß dem Oberbegriff des Anspruchs 1.

Stand der Technik

Elektromotoren werden für verschiedene technische Anwendungen eingesetzt. Beispielsweise in Elektro- oder Hybridfahrzeugen werden Elektromotoren zum Antrieb eines Kraftfahrzeuges eingesetzt. Für den Einsatz von Elektromotoren in Kraftfahrzeugen ist eine ständige und genaue Erfassung des von dem Elektromotor erzeugten Drehmoments erforderlich, um ungewollte Beschleunigungen oder Verzögerungen des Kraftfahrzeuges vermeiden zu können. Hierzu wird das Drehmoment aus den gemessenen Phasenströmen der Elektromagnete des Elektromotors und dem Drehwinkel des Rotors des Elektromotors mit einem Maschinenmodell bestimmt. Das Maschinenmodell enthält betriebsabhängige Parameter wie z. B. die Temperatur des Stators und des Rotors oder den Rotorfluss, die aufwendig angepasst werden müssen. Fehler oder Ungenauigkeiten im Berechnungspfad des Maschinenmodells führen zu falsch ermittelten Drehmomenten, welche sicherheitsrelevante Folgen für das Kraftfahrzeug haben können. Aus diesem Grund gibt es Methoden, um das mit dem Maschinenmodell berechnete Drehmoment zu plausibilisieren aus Messwerten der Spannung und des Stromes, das somit in nachteiliger Weise von der Genauigkeit und Funktionsfähigkeit der Sensoren für diese Messwerte abhängt.

Aus der DE 41 22 391 A1 ist ein Verfahren zum Betrieb eines drehzahlregelbaren elektrischen Motors, insbesondere eines bürstenlosen Servomotors, bekannt. Durch Regelung der Motorgrößen Strom, Lagewinkel und Drehzahl wird die Drehzahl aus dem mittels eines Lagegebers gemessenen Lagewinkels durch einen Filter bestimmt.

Die Dokumente DE 10 2008 026 509 A1, WO 2004/097359 A1, DE 10 2004 013 516 A1 und US 5,754,967 offenbaren andere Methoden zur Bestimmung des Drehmoments an einem Kraftfahrzeug.

Offenbarung der Erfindung

Vorteile der Erfindung

Erfindungsgemäßes Verfahren zur Bestimmung des Drehmomentes eines Elektromotors an einem Kraftfahrzeug, wobei von einem Rotor des Elektromotors ein Drehmoment erzeugt wird und das Drehmoment von einem Antriebsstrang auf wenigstens ein Antriebsrad übertragen wird mit den Schritten: Messen des Drehwinkels eines Rotors des Elektromotors, Bestimmen des von dem Rotor erzeugten Drehmomentes, wobei das wenigstens eine von dem Rotor angetriebene Antriebsrad festgesetzt wird, der feststehende Rotor kein Drehmoment erzeugt und ein erster Drehwinkel des feststehenden Rotors gemessen wird, anschließend von dem Rotor auf den Antriebsstrang ein Drehmoment aufgebracht wird, so dass der Rotor aufgrund der begrenzten Steifigkeit des Antriebsstranges eine Rotationsbewegung ausführt und anschließend in einem Gleichgewichtszustand zwischen dem von dem Rotor erzeugten Drehmoment und einem Gegendrehmoment des Antriebsstranges ein zweiter Drehwinkel des Rotors gemessen wird, aus den gemessenen Werte des ersten und zweiten Drehwinkels des Rotors das von dem Rotor erzeugte Drehmoment und/oder die Gesamtsteifigkeit des Antriebsstranges ermittelt werden. In vorteilhafter Weise kann damit das Drehmoment des Elektromotors bestimmt werden ohne dass Messwerte für den Strom oder die Spannung des Elektromotors erforderlich sind und somit keine Fehler aufgrund von einer mangelnden Genauigkeit oder Funktionsfähigkeit der Sensoren für die Messwerte auftreten.

In einer Variante werden das von dem Rotor erzeugte Drehmoment und/oder die Gesamtsteifigkeit des Antriebsstranges mit einem physikalischen Modell ermittelt.

In einer weiteren Ausführungsform ist das physikalische Modell ein Zweimassenschwinger mit einer ersten Masse mit einem Rotationsträgheitsmoment des Rotors des Elektromotors, einer zweiten Masse mit einem zweiten Ersatzrotationsträgheitsmoment und einer Drehstabfeder als Antriebsstrang zwischen der ersten Masse und der zweiten Masse.

Zweckmäßig umfasst der Antriebsstrang ein Getriebe und/oder eine Antriebswelle und/oder ein Differentialgetriebe und/oder einen Wandler von denen das Drehmoment von dem Elektromotor zu dem wenigstens einen Antriebsrad übertragen wird.

In einer weiteren Ausgestaltung wird für das physikalische Modell das Rotationsträgheitsmoment der ersten Masse und das Ersatzrotationsträgheitsmoment der zweiten Masse bestimmt.

In einer ergänzenden Ausführungsform führt das wenigstens eine Antriebsrad, insbesondere sämtliche Antriebsräder, zwischen den Zeitpunkten des Messens des ersten und zweitens Drehwinkels des Rotors keine Rotationsbewegung aus.

Zweckmäßig wird die Gesamtsteifigkeit der Drehstabfeder mit der Gesamtsteifigkeit des Antriebsstranges zwischen dem Elektromotor und der wenigstens einen Feststellbremse gleichgesetzt.

In einer weiteren Variante umfasst das Ersatzrotationsträgheitsmoment der zweiten Masse neben dem Rotationsträgheitsmoment des wenigstens einen Antriebsrades zusätzlich das fiktive Rotationsträgheitsmoment des Kraftfahrzeuges, wobei das fiktive Rotationsträgheitsmoment des Kraftfahrzeuges aus dem translatorischen Trägheitsmoment des Kraftfahrzeuges berechnet wird.

Insbesondere überträgt der Antriebsstrang bei der wenigstens eine geöffneten Feststellbremse das Drehmoment des Elektromotors von dem Elektromotor zu dem wenigstens einen Antriebsrad und der Antriebsstrang überträgt bei der wenigstens einen betätigten Feststellbremse das Drehmoment des Elektromotors von dem Elektromotor zu der wenigstens einen Feststellbremse.

Vorzugsweise wird der zweite Winkel des Rotors bei einem im Wesentlichen feststehenden Rotor im Gleichgewichtszustand gemessen. Ein im Wesentlichen feststehender Rotor bedeutet, dass die Winkelgeschwindigkeit des Rotors kleiner als eine Umdrehung pro Minute ist.

In einer weiteren Ausführungsform werden das von dem Rotor erzeugte Drehmoment und/oder die Gesamtsteifigkeit des Antriebsstranges mit einer Gleichung ermittelt, wobei die Gleichung vorzugsweise lautet $M_{el} = (c/u^2)*(\varphi_{R2} - \varphi_{R1})$ und hierbei $M_{el}$ das Drehmoment des Elektromotors (1) ist, c die Gesamtsteifigkeit des Antriebsstranges ist, u das Übersetzungsverhältnis des Getriebes ist, $\varphi_{R2}$ der zweite Drehwinkel des Rotors ist und $\varphi_{R1}$ der erste Drehwinkel des Rotors ist.

Kurze Beschreibung der Zeichnungen

Im Nachfolgenden wird ein Ausführungsbeispiel der Erfindung unter Bezugnahme auf die beigefügten Zeichnungen näher beschrieben. Es zeigt:

Fig. 1    eine stark schematisierte Darstellung einer Antriebseinrichtung
Fig. 2    einen Längsschnitt eines Elektromotors,
Fig. 3    eine Ansicht eines Zweimassenschwingers und

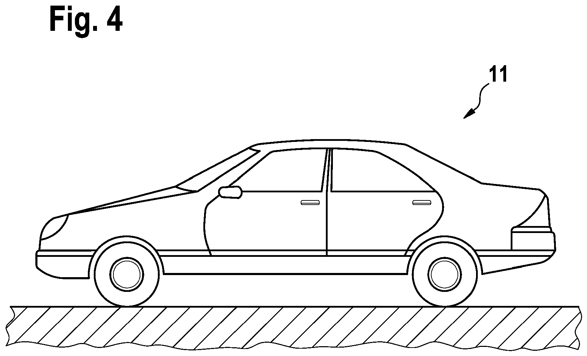

Fig. 4    eine Seitenansicht eines Kraftfahrzeuges.

Ausführungsformen der Erfindung

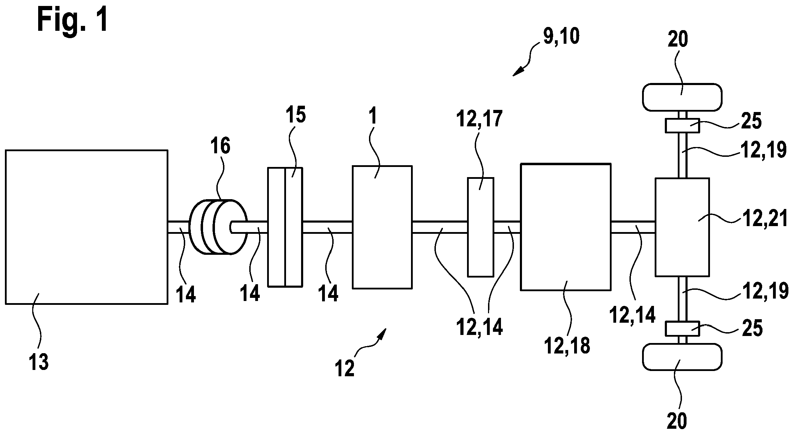

In Fig. 1 ist eine als Hybridantriebseinrichtung 10 ausgebildete Antriebseinrichtung 9 für ein Kraftfahrzeug 11 dargestellt. Die Hybridantriebseinrichtung 10 für das Kraftfahrzeug 11 umfasst einen Verbrennungsmotor 13 sowie einen Elektromotor 1 zum Antreiben des Kraftfahrzeuges 11. Der Verbrennungsmotor 13 und der Elektromotor 1 sind mittels einer Antriebswelle 14 miteinander verbunden. Die mechanische Koppelung zwischen dem Verbrennungsmotor 13 und dem Elektromotor 1 kann mittels einer Kupplung 15 hergestellt und aufgehoben werden. Ferner ist in der Antriebswelle 14, welche den Verbrennungsmotor 13 und den Elektromotor 1 miteinander koppelt, eine Elastizität 16 angeordnet. Der Elektromotor 1 ist mit einem Differentialgetriebe 21 mechanisch gekoppelt. In der Antriebswelle 14, welche den Elektromotor 1 und das Differentialgetriebe 21 miteinander verbindet, ist ein Wandler 17 und ein Getriebe 18 angeordnet. Mittels des Differentialgetriebes 21 werden durch Seitenwellen 19 die Antriebsräder 20 angetrieben. Die beiden Antriebsräder 20 können mit je einer Feststellbremse 25 gebremst bzw. festgesetzt werden, so dass bei einem Stillstand des Kraftfahrzeuges 11 und den betätigten Feststellbremsen 25 auch bei einem von dem Elektromotor 1 aufgebrachten Drehmoment keine (Rotations-)Bewegung der Antriebsräder 25 möglich ist, die Antriebsräder 25 somit feststehend sind. Abweichend hiervon kann auch nur eine Feststellbremse 25 an der Antriebswelle 14 zwischen dem Getriebe 18 und dem Differentialgetriebe 21 angeordnet sein (nicht dargestellt).

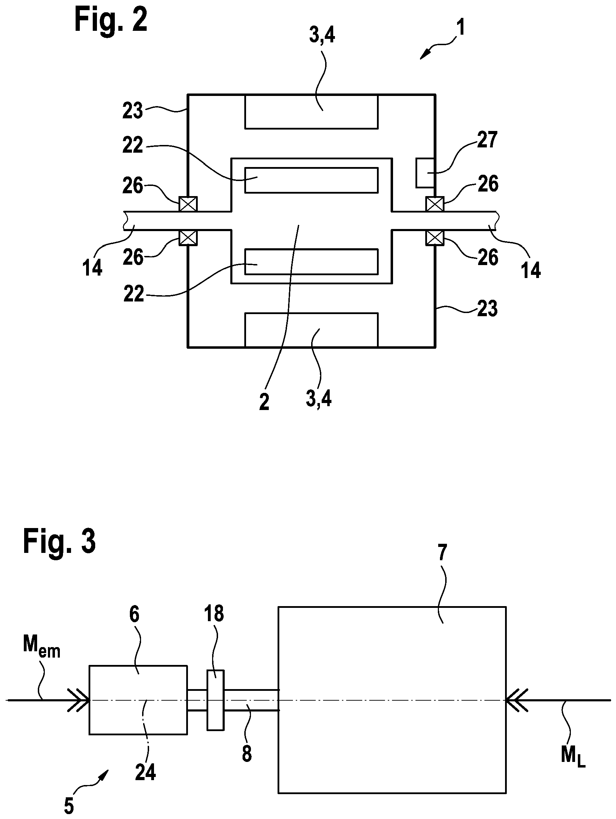

In Fig. 2 ist ein Längsschnitt des Elektromotors 1 dargestellt. Der Elektromotor 1 weist einen Rotor 2 auf und einen Stator 3 mit Elektromagneten 4 als Spulen 4 auf. Der Rotor 2 bildet zusammen mit der Antriebswelle 14 eine Baueinheit und an dem Rotor 2 sind Permanentmagnete 22 angeordnet. Elektromagnete 4 des Stators 3 sind an einem Gehäuse 23 des Elektromotors 1 gelagert und das Gehäuse 23 ist mittels einer Lagerung 26 an der Antriebswelle 14 gelagert. Der Elektromotor 1 ist außerdem mit einem als Digitalsensor ausgebildeten Sensor 27 zur Erfassung des Drehwinkels des Rotors 2 bzw. der Antriebswelle 14 ausgestattet. Mittels des Sensors 27 wird der Drehwinkel $\varphi_R$ des Rotors 2 gemessen.

In Fig. 3 ist ein Zweimassenschwinger 5 abgebildet. Der Zweimassenschwinger 5 ist ein Rotationsschwinger dessen erste Masse 6 und zweite Masse 7 um eine Rotationsachse 24 eine Rotationsbewegung fiktiv ausführen. Die erste Masse 6 ist mit der zweiten Masse 7 mittels einer Drehstabfeder 8 verbunden. Das Rotationsträgheitsmoment $J_R$ der ersten Masse 6 entspricht dabei dem Rotationsträgheitsmoment $J_R$ des Elektromotors 1 bzw. des Rotors 2 des Elektromotors 1. In den in Fig. 1 dargestellten Komponenten des Antriebsstranges 12 führen beispielsweise die Antriebswelle 14, Teile des Wandlers 17 und des Getriebes 18, Teile des Differentialgetriebes 21, die Seitenwelle 19 und die Antriebswelle 14 eine Rotationsbewegung aus. Das Rotationsträgheitsmoment dieser Komponenten ist aufgrund der konstruktiven Auslegung des Kraftfahrzeuges 11 bekannt und kann berechnet werden. Das Kraftfahrzeug 11 kann eine Translationsbewegung ausführen. Bei einer Translationsbewegung des Kraftfahrzeuges 11 tritt ein Massenträgheitsmoment auf. Dieses Massenträgheitsmoment der Masse des Kraftfahrzeuges 11, welche eine Translationsbewegung ausführt, wird dabei in ein Ersatzrotationsträgheitsmoment $J_F$ des Kraftfahrzeuges 11 umgerechnet. Das Ersatzrotationsträgheitsmoment $J_F$ der zweiten Massen 7 in dem Zweimassenschwinger 5 entspricht dabei dem aus dem Massenträgheitsmoment des Kraftfahrzeuges 11 mit einer Translationsbewegung umgerechneten Ersatzträgheitsmoment sowie dem Rotationsträgheitsmoment der Komponenten des Antriebsstranges 12 mit einer Rotationsbewegung und der Antriebsräder 20. Der Antriebsstrang 12 in diesem Modell sind die Komponenten der Antriebseinrichtung 9 zwischen dem Elektromotor 1 und der wenigstens einen Feststellbremse 25, hier zwei Feststellbremsen 25, d. h. die Antriebswelle 14 von dem Elektromotor 1 zu dem Differentialgetriebe 21, die Seitenwellen 19, der Wandler 17 und das Getriebe 18. Dabei weist der Antriebsstrang 12 keine Einrichtung auf, bei welcher ein Schlupf auftritt, z. B. eine Kupplung 15 bei welcher ein Schlupf zwischen beiden Kupplungsscheiben vorhanden ist. Das Getriebe 18 weist ein Übersetzungsverhältnis von z. B. u=10 auf, d. h. dass bei 10 Umdrehungen des Rotors 2 oder der Antriebswelle 14 zwischen dem Elektromotor 1 und dem Getriebe 18 führt die Antriebswelle 14 zwischen dem Getriebe 18 und dem Differentialgetriebe 21 eine Umdrehung aus. Weist der Antriebsstrang 12 kein Getriebe 18 auf ist u=1.

In diesem physikalischen Modell des Zweimassenschwingers 5 gelten die beiden Differentialgleichungen 1a und 1b

$$J_R*\varphi''_R = M_{em} - c/u * (\varphi_R/u - \varphi_F) - d/u * (\varphi'_R/u - \varphi'_F) \qquad (1a)$$

$$J_F*\varphi''_F = c/u * (\varphi_R/u - \varphi_F) + d/u * (\varphi'_R/u - \varphi'_F) - M_L \qquad (1b)$$

Dabei ist $\varphi_R$ der Drehwinkel der ersten Masse 6 bzw. des Rotors 2, $(\varphi'_R = d\varphi_R/dt$ die Winkelgeschwindigkeit der ersten Masse 6 und $\varphi''_R = d\varphi'_R/dt$ die Winkelbeschleunigung der ersten Masse 6. In analoger Weise ist $\varphi_F$ der Drehwinkel der zweiten Masse 7, $\varphi'_F = d\varphi_F/dt$ die Winkelgeschwindigkeit der zweiten Masse 7 und $\varphi''_F = d\varphi'_F/dt$ die Winkelbeschleunigung der zweiten Masse 7. Die Drehstabfeder 8 weist die Gesamtsteifigkeit c und die Gesamtdämpfung d auf, welche der Gesamtsteifigkeit c und die Gesamtdämpfung d des Antriebsstranges 12 zwischen dem Elektromotor 1 und den beiden Feststellbremsen 25 entspricht.

Das Kraftfahrzeug 11 befindet sich im Stillstand, so dass die Antriebsräder 20 keine Rotationsbewegung ausführen und mit den beiden Feststellbremsen 25 werden die Antriebsräder 20 festgesetzt. Der Elektromotor 1 erbringt kein Drehmoment $M_{el}$, der Rotor 2 ist feststehend und es wird ein erster Drehwinkel $\varphi_{R1}$, des Rotors 2 erfasst. Nach dem Festsetzen der beiden Antriebsräder 20 wird ein Drehmomentes $M_{el}$ mit dem Elektromotor 1 auf die Antriebswelle 14 aufgebracht und dieses Drehmoment $M_{el}$ bedingt eine Torsion des Antriebsstranges 12 bzw. der Drehstabfeder 8 wegen der begrenzten Gesamtsteifigkeit c, da die Gesamtsteifigkeit nicht gegen Unendlich geht.. Insbesondere die Antriebswelle 14 und die Seitenwellen 19 werden dabei tordiert. Der Antriebsstrang 12 bzw. die Drehstabfeder 8 bringen auf den Rotor 2 ein Gegendrehmoment $M_L$ bzw. ein Lastdrehmoment $M_L$ auf bis in einem Gleichgewichtszustand die Winkelgeschwindigkeit $\varphi'_R = d\varphi_R/dt$ der ersten Masse 6 bzw. des Rotors 2 gleich Null ist. In diesem Gleichgewichtszustand wird ein zweiter Drehwinkel des Rotors 2 erfasst.

Damit ist auch die Winkelbeschleunigung $\varphi''_R = d\varphi'_R/dt$ der ersten Masse 6 bzw. des Rotors 2 gleich Null und somit in der Differentialgleichung (1a) $J_R*\varphi''_R = 0$. Ferner ist neben der Winkelgeschwindigkeit $\varphi'_R = d\varphi_R/dt$ der ersten Masse 6 bzw. des Rotors 2 auch die Winkelgeschwindigkeit der zweiten Masse 7 $\varphi'_F = d\varphi_F/dt = 0$, so dass in der Differentialgleichung (1a) auch $d/u * (\varphi'_R/u - \varphi'_F) = 0$ ist. Damit ergibt sich im Gleichgewichtszustand für $M_{em}$ die folgende Gleichung (2):

$$M_{em} = c/u * (\varphi_R/u - \varphi_F) \qquad (2)$$

In dieser Gleichung ist $\varphi_F = 0$, weil die Antriebsräder 20 festgesetzt sind und damit keinen Drehwinkel ausgeführt haben. $\varphi_R$ als ist die Differenz aus den zweiten und ersten erfassten Drehwinkel $\varphi_R$, d. h. der Drehwinkel $\varphi_R$ des Rotor 2 bzw. der ersten Masse 6 bei den festgesetzten Antriebsrädern 20 bis zu dem Gleichgewichtszustand.

Damit ergibt sich die Gleichung (3):

$$M_{em} = (c/u^2) * (\varphi_{R2} - \varphi_{R1}) \qquad (3)$$

Die Getriebeübersetzung ist eine bekannte Größe und die Gesamtsteifigkeit c des Antriebsstranges 12 ist eine mechanische Kenngröße, die entweder aus den Konstruktionsdaten berechnet und/oder mit Messungen bestimmt werden kann.

Die Gleichung (2) bzw. (3) ermöglicht somit die Berechnung des Drehmomentes $M_{em}$ des Elektromotors 1 unabhängig von Messwerten für die Spannung und den Strom an dem Elektromotor 2 sowie von Parametern eines Maschinenmodells für den Elektromotor 1.

Das mit der Gleichung (2) bzw. (3) berechnete Drehmomentes $M_{em}$ des Elektromotors 1 kann z. B. für eine Kalibrierung der Parameter eines Maschinenmodells, für eine Kalibrierung der Stromsensorik des Elektromotors 1 oder für eine Bestimmung der Gesamtsteifigkeit c des Antriebsstranges 12 eingesetzt werden, sofern das Drehmoment $M_{em}$ bekannt ist.

Insgesamt betrachtet sind mit dem erfindungsgemäßen Verfahren und der erfindungsgemäßen Antriebseinrichtung 9 wesentliche Vorteile verbunden. Das von dem Elektromotor 1 erzeugte Drehmoment $M_{em}$ kann auf einfache Weise bestimmt werden ohne dass aufwendige und fehleranfällige Maschinenmodelle des Elektromotors 1 erforderlich sind. Es ist lediglich ein kurzzeitiger Stillstand des Kraftfahrzeuges 11 erforderlich; es kann somit beispielsweise mit dem Kraftfahrzeug 11 auf einem Prüfstand ausgeführt werden oder auch bei einem kurzzeitigen Stillstand des Kraftfahrzeuges 11 an einer Ampel im normalen Fahrbetrieb, sofern von der Steuerung des Kraftfahrzeuge 11 während des Stillstandes die Feststellbremsen 25 kurzzeitig betätigt werden und während des Betätigens der Feststellbremsen für einen Zeitraum von weniger als eine Sekunde, z. B. im Bereich von 300 bis 500 ms, von dem Elektromotor 1 das Drehmoment $M_{em}$ erzeugt wird, kann somit die Differenz aus den zweiten und ersten erfassten Drehwinkel $\varphi_R$ gemessen werden. Das Verfahren kann für alle Arten von Elektromotoren 1, z. B. GM, ASM, PSM oder GRM, eingesetzt werden.

## Patentansprüche

1. Verfahren zur Bestimmung des Drehmomentes eines Elektromotors (1) an einem Kraftfahrzeug (11), wobei von einem Rotor (2) des Elektromotors (1) ein Drehmoment erzeugt wird und das Drehmoment von einem Antriebsstrang (12) auf wenigstens ein Antriebsrad (20) übertragen wird mit den Schritten:

   - Messen des Drehwinkels eines Rotors (2) des Elektromotors (1),
   - Bestimmen des von dem Rotor (2) erzeugten Drehmomentes,

   **dadurch gekennzeichnet, dass**

   - das wenigstens eine von dem Rotor (2) angetriebene Antriebsrad (20) festgesetzt wird, der feststehende Rotor (2) kein Drehmoment erzeugt und ein erster Drehwinkel des feststehenden Rotors (2) gemessen wird, anschließend
   - von dem Rotor (2) auf den Antriebsstrang (12) ein Drehmoment aufgebracht wird, so dass der Rotor (2) aufgrund der begrenzten Steifigkeit des Antriebsstranges (12) eine Rotationsbewegung ausführt und anschließend
   - in einem Gleichgewichtszustand zwischen dem von dem Rotor (2) erzeugten Drehmoment und einem Gegendrehmoment des Antriebsstranges (12) ein zweiter Drehwinkel des Rotors (2) gemessen wird,
   - aus den gemessenen Werten des ersten und zweiten Drehwinkels des Rotors (2) das von dem Rotor (2) erzeugte Drehmoment und/oder die Gesamtsteifigkeit des Antriebsstranges (12) ermittelt werden.

2. Verfahren nach Anspruch 1,
   **dadurch gekennzeichnet, dass**
   das von dem Rotor (2) erzeugte Drehmoment und/oder die Gesamtsteifigkeit des Antriebsstranges (12) mit einem physikalischen Modell ermittelt werden.

3. Verfahren nach Anspruch 2,
   **dadurch gekennzeichnet, dass**
   das physikalische Modell ein Zweimassenschwinger (5) ist mit einer ersten Masse (6) mit einem Rotationsträgheitsmoment des Rotors (2) des Elektromotors (1), einer zweiten Masse (7) mit einem zweiten Ersatzrotationsträgheitsmoment und einer Drehstabfeder (8) als Antriebsstrang (12) zwischen der ersten Masse (6) und der zweiten Masse (7).

4. Verfahren nach einem oder mehreren der vorhergehenden Ansprüche,
   **dadurch gekennzeichnet, dass**

der Antriebsstrang (12) ein Getriebe (18) und/oder eine Antriebswelle (14) und/oder ein Differentialgetriebe (21) und/oder einen Wandler (17) umfasst von denen ein Drehmoment von dem Elektromotor (1) zu dem wenigstens einen Antriebsrad (20) übertragen wird.

5. Verfahren nach einem oder mehreren der vorhergehenden Ansprüche,
**dadurch gekennzeichnet, dass**
das wenigstens eine Antriebsrad (20), insbesondere sämtliche Antriebsräder (20), zwischen den Zeitpunkten des Messens des ersten und zweitens Drehwinkels des Rotors (2) keine Rotationsbewegung ausführt.

6. Verfahren nach einem oder mehreren der Ansprüche 3 bis 5,
**dadurch gekennzeichnet, dass**
die Gesamtsteifigkeit der Drehstabfeder (8) mit der Gesamtsteifigkeit des Antriebsstranges (12) zwischen dem Elektromotor (1) und der wenigstens einen Feststellbremse (25) gleichgesetzt wird.

7. Verfahren nach einem oder mehreren der vorhergehenden Ansprüche,
**dadurch gekennzeichnet, dass**
der Antriebsstrang (12) bei der wenigstens einen geöffneten Feststellbremse (25) das Drehmoment des Elektromotors (1) von dem Elektromotor (1) zu dem wenigstens einen Antriebsrad (20) überträgt und der Antriebsstrang (12) bei der wenigstens einen betätigten Feststellbremse (25) das Drehmoment des Elektromotors (1) von dem Elektromotor (1) zu der wenigstens einen Feststellbremse (25) überträgt.

8. Verfahren nach einem oder mehreren der vorhergehenden Ansprüche,
**dadurch gekennzeichnet, dass**
der zweite Winkel des Rotors (2) bei einem im Wesentlichen feststehenden Rotor (2) im Gleichgewichtszustand gemessen wird.

9. Verfahren nach einem oder mehreren der vorhergehenden Ansprüche,
**dadurch gekennzeichnet, dass**
das von dem Rotor (2) erzeugte Drehmoment und/oder die Gesamtsteifigkeit des Antriebsstranges (12) mit einer Gleichung ermittelt werden, wobei die Gleichung vorzugsweise lautet $M_{el} = (c/u^2)^*(\varphi_{R2} - \varphi_{R1})$ und hierbei $M_{el}$ das Drehmoment des Elektromotors (1) ist, c die Gesamtsteifigkeit des Antriebsstranges (12) ist, u das Übersetzungsverhältnis des Getriebes(18) ist, $\varphi_{R2}$ der zweite Drehwinkel des Rotors (2) ist und $\varphi_{R1}$ der erste Drehwinkel des Rotors (2) ist.

**Claims**

1. Method for determining the torque of an electric motor (1) of a motor vehicle (11), wherein a torque is generated by a rotor (2) of the electric motor (1) and the torque is transmitted to at least one drive wheel (20) by a drive train (12), comprising the steps of:

   - measuring the rotation angle of a rotor (2) of the electric motor (1),
   - determining the torque which is generated by the rotor (2),

   **characterized in that**

   - the at least one drive wheel (20) which is driven by the rotor (2) is stopped, the stationary rotor (2) does not generate any torque and a first rotation angle of the stationary rotor (2) is measured, then
   - a torque is applied to the drive train (12) by the rotor (2), so that the rotor (2) executes a rotational movement on account of the limited stiffness of the drive train (12), and then
   - a second rotation angle of the rotor (2) is measured in an equilibrium state between the torque which is generated by the rotor (2) and a countertorque of the drive train (12),
   - the torque which is generated by the rotor (2) and/or the total stiffness of the drive train (12) are/is ascertained from the measured values of the first and second rotation angle of the rotor (2).

2. Method according to Claim 1,
   **characterized in that**
   the torque which is generated by the rotor (2) and/or the total stiffness of the drive train (12) are ascertained using a physical model.

3. Method according to Claim 2,
   **characterized in that**
   the physical model is a dual-mass oscillator (5) comprising a first mass (6) with a rotational moment of inertia of the rotor (2) of the electric motor (1), a second mass (7) with a second equivalent rotational moment of inertia, and a rotary bar spring (8) as drive train (12) between the first mass (6) and the second mass (7).

4. Method according to one or more of the preceding claims,
   **characterized in that**
   the drive train (12) comprises a gear mechanism (18) and/or a drive shaft (14) and/or a differential gear mechanism (21) and/or a converter (17) by which a torque is transmitted from the electric motor (1) to the at least one drive wheel (20).

5. Method according to one or more of the preceding claims,
   **characterized in that**
   the at least one drive wheel (20), in particular all of the drive wheels (20), does/do not execute any rotational movement between the times at which the first and the second rotation angle of the rotor (2) are measured.

6. Method according to one or more of Claims 3 to 5,
   **characterized in that**
   the total stiffness of the rotary bar spring (8) is set equal to the total stiffness of the drive train (12) between the electric motor (1) and the at least one parking brake (25).

7. Method according to one or more of the preceding claims,
   **characterized in that**
   the drive train (12) transmits the torque of the electric motor (1) from the electric motor (1) to the at least one drive wheel (20) when the at least one parking brake (25) is open, and the drive train (12) transmits the torque of the electric motor (1) from the electric motor (1) to the at least one parking brake (25) when the at least one parking brake (25) is operated.

8. Method according to one or more of the preceding claims,
   **characterized in that**
   the second angle of the rotor (2) is measured in the equilibrium state with a substantially stationary rotor (2).

9. Method according to one or more of the preceding claims,
   **characterized in that**
   the torque which is generated by the rotor (2) and/or the total stiffness of the drive train (12) are/is ascertained using an equation, wherein the equation preferably reads $M_{el} = (c/u^2)*((\varphi_{R2} - \varphi_{R1})$, where $M_{el}$ is the torque of the electric motor (1), c is the total stiffness of the drive train (12), u is the transmission ratio of the gear mechanism (18), $\varphi_{R2}$ is the second rotation angle of the rotor (2), and $\varphi_{R1}$ is the first rotation angle of the rotor (2).

**Revendications**

1. Procédé de détermination du couple d'un moteur électrique (1) sur un véhicule automobile (11), dans lequel un couple est généré par un rotor (2) du moteur électrique (1) et le couple est transmis par un groupe motopropulseur (12) à au moins une roue motrice (20), comprenant les étapes consistant à :

   - mesurer l'angle de rotation d'un rotor (2) du moteur électrique (1),
   - déterminer le couple généré par le rotor (2),

   **caractérisé en ce que**

   - l'au moins une roue motrice (20) entraînée par le rotor (2) est immobilisée, le rotor fixe (2) ne génère aucun couple et un premier angle de rotation du rotor fixe (2) est mesuré, puis
   - un couple est appliqué par le rotor (2) au groupe motopropulseur (12), de manière à ce que le rotor (2) effectue un mouvement de rotation en raison de la rigidité limitée du groupe motopropulseur (12), puis

- un deuxième angle de rotation est mesuré par le rotor (2) dans un état d'équilibre entre le couple généré par le rotor (2) et un couple de réaction du groupe motopropulseur (12),
- le couple généré par le rotor (2) et/ou la rigidité totale du groupe motopropulseur (12) sont déterminés à partir des valeurs mesurées des premier et deuxième angles de rotation du rotor (2).

2. Procédé selon la revendication 1, **caractérisé en ce que** le couple généré par le rotor (2) et/ou la rigidité totale du groupe motopropulseur (12) est/sont déterminé(s) à l'aide d'un modèle physique.

3. Procédé selon la revendication 2, **caractérisé en ce que** le modèle physique est un oscillateur à deux masses (5) ayant une première masse (6) présentant un couple d'inertie de rotation du rotor (2) du moteur électrique (1), une deuxième masse (7) présentant un deuxième couple d'inertie de rotation de substitution et une barre de torsion (8) en tant que groupe motopropulseur (12) entre la première masse (6) et la deuxième masse (7).

4. Procédé selon une ou plusieurs des revendications précédentes, **caractérisé en ce que** le groupe motopropulseur (12) comprend une transmission (18) et/ou un arbre d'entraînement (14) et/ou un différentiel (21) et/ou un convertisseur (17) par lesquels un couple du moteur électrique (1) est transmis à l'au moins une roue motrice (20).

5. Procédé selon une ou plusieurs des revendications précédentes, **caractérisé en ce que** l'au moins une roue motrice (20), notamment toutes les roues motrices (20), n'effectue aucun mouvement de rotation entre les instants de mesure des premier et deuxième angles de rotation du rotor (2).

6. Procédé selon une ou plusieurs des revendications 3 à 5, **caractérisé en ce que** la rigidité totale de la barre de torsion (8) est identifiée à la rigidité totale du groupe motopropulseur (12) entre le moteur électrique (1) et l'au moins un frein de stationnement (25).

7. Procédé selon une ou plusieurs des revendications précédentes, **caractérisé en ce que** le groupe motopropulseur (12) transmet le couple produit par le moteur électrique (1) du moteur électrique (1) à l'au moins une roue motrice (20) lorsque l'au moins un frein de stationnement (25) est ouvert, et **en ce que** le groupe motopropulseur (12) transmet le couple produit par le moteur électrique (1) du moteur électrique (1) à l'au moins un frein de stationnement (25) lorsque l'au moins un frein de stationnement (25) est actionné.

8. Procédé selon une ou plusieurs des revendications précédentes, **caractérisé en ce que** le deuxième angle du rotor (2) est mesuré à l'état d'équilibre lorsque le rotor est sensiblement immobile (2).

9. Procédé selon une ou plusieurs des revendications précédentes, **caractérisé en ce que** le couple généré par le rotor (2) et/ou la rigidité totale du groupe motopropulseur (12) est/sont déterminé(s) à l'aide d'une équation, l'équation s'énonçant de préférence $M_{el} = (c/u^2) * (\varphi_{R2} - \varphi_{R1})$, où $M_{el}$ est le couple du moteur électrique (1), c est la rigidité totale du groupe motopropulseur (12), u est le rapport de transmission de la transmission (18), $\varphi_{R2}$ est le deuxième angle de rotation du rotor (2) et $\varphi_{R1}$, est le premier angle de rotation du rotor (2).

Fig. 1

**Fig. 2**

**Fig. 3**

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4122391 A1
- DE 102008026509 A1
- WO 2004097359 A1
- DE 102004013516 A1
- US 5754967 A